# FASCICULE DE BREVET EUROPEEN

(11) **EP 3 229 980 B1**
(45) Date de publication et mention de la délivrance du brevet: **06.09.2023**
(21) Numéro de dépôt: 15805445.2
(22) Date de dépôt: 03.12.2015
(51) Int. Cl.: G10K 11/20, G10K 11/36, B06B 1/06, G06F 3/01, G06F 1/16

(54) **DISPOSITIF VIBRANT COMPORTANT DES REFLECTEURS MECANIQUES ENCASTRES POUR DEFINIR UNE ZONE ACTIVE DE PROPAGATION DE MODES DE PLAQUE ET APPAREIL MOBILE COMPORTANT LE DISPOSITIF**
SCHWINGENDE VORRICHTUNG MIT EINGEBETTETEN MECHANISCHEN REFLEKTOREN ZUR DEFINITION EINES AKTIVPLATTENMODUSAUSBREITUNGSBEREICHS UND MOBILGERÄT MIT DER VORRICHTUNG
VIBRATING DEVICE COMPRISING EMBEDDED MECHANICAL REFLECTORS FOR DEFINING AN ACTIVE PLATE MODE PROPAGATION AREA AND MOBILE APPARATUS COMPRISING THE DEVICE

(30) Priorité: 08.12.2014 FR 1462035
(43) Date de publication de la demande: 18.10.2017
(73) Titulaire: Commissariat à l'Énergie Atomique et aux Énergies Alternatives, 75015 Paris (FR); STMicroelectronics (Crolles 2) SAS, 38920 Crolles (FR); Université Grenoble Alpes, 38400 Saint-Martin-d'Hères (FR); Institut Polytechnique de Grenoble, 38031 Grenoble Cedex 1 (FR)
(72) Inventeur: CHAPPAZ, Cédrick, 38920 Crolles (FR); CASSET, Fabrice, 38570 Tencin (FR); BASROUR, Skandar, 38100 Grenoble (FR); GORISSE, Marie, 38500 Voiron (FR)
(74) Mandataire: Atout PI Laplace
(86) Numéro de dépôt international: PCT/EP2015/078478
(87) Numéro de publication internationale: WO 2016/091708

(56) Documents cités:
- EP-A1- 2 350 795
- EP-A2- 2 432 126
- WO-A1-2013/109090
- FR-A1- 2 437 070
- JP-A- 2007 065 798
- US-A1- 2012 038 471
- SAKURAI TATSUMA ET AL: "Sharp tactile line presentation array using edge stimulation method", 2014 IEEE HAPTICS SYMPOSIUM (HAPTICS), IEEE, 23 février 2014 (2014-02-23), pages 271-275, XP032582584, DOI: 10.1109/HAPTICS.2014.6775466
- SERGEANT P ET AL: "Geometrical optimization of an ultrasonic tactile plate", SENSORS AND ACTUATORS A, ELSEVIER SEQUOIA S.A., LAUSANNE, CH, vol. 161, no. 1-2, 1 juin 2010 (2010-06-01), pages 91-100, XP027120706, ISSN: 0924-4247 [extrait le 2010-05-25] cité dans la demande

## Description

Le domaine de l'invention est celui des supports vibrants pouvant être utilisés dans de nombreuses applications et notamment celle portant sur l'interface haptique correspondant à une technologie dans laquelle un objet peut interagir avec l'environnement par le sens du toucher et qui est particulièrement intéressante pour les téléphones portables.

En effet, actuellement, les constructeurs de téléphones portables qui se sont lancés dans les mobiles à écran tactile, cherchent à se démarquer en intégrant une interface haptique. Ainsi, lorsqu'un utilisateur vient glisser son doigt sur une icône située sur l'écran, il peut ressentir une légère vibration provenant du mobile, vibration sensée lui retranscrire l'impression de pression sur un bouton.

JP2007065798A décrit un dispositif à écran tactile pourvu d'une face tactile et configuré pour détecter la position de contact d'un objet entrant en contact avec la face tactile, Ce dispositif à écran tactile est pourvu d'un substrat, d'un diaphragme installé de manière à faire face au substrat et d'un élément piézoélectrique installé dans le diaphragme pour faire vibrer le diaphragme.

Dans ce cadre, les demandeurs ont développé une solution utilisant des couches minces piézoélectriques comme actionneur et ont démontré la possibilité d'obtenir un ressenti haptique en utilisant un matériau piézoélectrique tel que le PZT (Titano-zirconate de plomb) qui permet d'actionner un mode de plaque tel que le mode de propagation des ondes de Lamb antisymétriques ou de Rayleigh. Ce mode de vibration induit une lame d'air dénommé effet « squeeze film » entre le doigt et la plaque, qui provoque une modification du coefficient de frottement entre la plaque et le doigt. Une variation de l'onde créée dans la plaque induit une variation contrôlée du coefficient de friction entre le doigt et la plaque.

De manière générale, les modes de vibration sont bien maîtrisés dans le cadre d'une plaque rectangulaire et sont perturbés dès lors que la géométrie utilisée est non conventionnelle et présente par exemple des angles arrondis. Il convient dans ce cas de trouver une solution au problème de perturbation de propagation des ondes dans ce type de géométrie.

Un grand nombre de références font état de l'étude de ces modes de vibrations sur des structures diverses et la propagation des ondes de Lamb a déjà fait l'objet de nombreuses études mais généralement destinées au contrôle non destructif de structures.

Il existe ainsi un nombre important de références portant sur l'étude de la propagation des ondes de Lamb dans des plaques rectangulaires, on peut notamment citer les articles de : P. Sergeant, F. Giraud, B. Lemaire-Semail, "Geometrical optimization of an ultrasonic tactile plate", Sensors and Actuators A 161, pp. 91-100, 2010, et M. Biet, F. Giraud, B. Lemaire-Semail, « Squeeze film effect for the design of an ultrasonic tactile plate », IEEE transactions on ultrasonics, Ferroelectrics and Frequency control, vol. 54, n° 12, December 2007, pp. 2678-2688, en relation avec des systèmes haptiques.

D'autres articles étudient la propagation des ondes de Lamb dans des plaques rectangulaires avec pour perspectives le contrôle non destructif de structures : Y. Gomez-Ullate et al, "Lamb waves génération in plates using glued piezoceramics", Boletin de la sociedad espanola de Ceramica y Vidrio, vol 45, 2006, pp. 188-191.

Des études ont déjà porté sur des plaques non rectangulaires, ou ayant des particularités au niveau de leurs extrémités. En effet, Il existe des articles faisant état de l'étude de plaques biseautées, notamment en aérospatiale, ou le biseau en bout de plaque est induit par les techniques d'assemblage des diverses pièces. On peut retrouver ce type d'étude dans l'article de MR. Mofakhami and C. Boller, « Lamb wave interaction with non-symmetric features at structural boundaries », GAMM 2008, N. Wilkie-Chancellier. Dans ces publications, il s'agit d'étudier la réflexion de l'onde de Lamb sur ce type de particularités dans le but de faire du contrôle non destructif. Il n'est pas reporté ou étudié comment s'affranchir de la particularité à l'extrémité de la plaque pour conserver l'onde de Lamb.

De nombreuses références reportent l'étude de la propagation des ondes de Lamb dans des plaques rectangulaires avec des défauts tels que des discontinuités : F. Benmeddour and E. Moulin, « Génération of a selected Lamb mode by piezoceramic transducers : Application to nondestructive testing of Aeronautical structures », in Piezoelectric materials and devices - Practice and applications, ISBN 978-953-51, published February 27, 2013], des trous circulaires ou rectangulaires, traversant ou non débouchant : O. Diligent, "Interaction between fundamental Lamb modes and defects in plates", Thesis of the University of London, 2003, MV. Predoi, A. Negrea, "Ultrasonic guided waves sensitivity to flaws near plate edge", UPC. Sci. Bull., Series D, Vol 72, Iss. 2, 2010. Là encore, il s'agit d'étudier des systèmes de contrôles non destructifs des structures. L'onde de Lamb sert à mettre en évidence le défaut et il n'est pas étudié comment s'en affranchir.

Il existe également des références étudiant les vibrations des plaques rectangulaires à angles arrondis (super elliptical plates) : S. Ceribasi, G. Altay, « free vibration of super elleptical plates with constant and variable thickness by Ritz method », Journal of Sound and Vibration 319, 2009, pp. 668-680. Mais l'ensemble de ces références ne propose pas de solution permettant de conserver dans ces plaques aux angles arrondis, un mode tel que celui que l'on peut obtenir dans une plaque rectangulaire, par exemple en modifiant les conditions aux limites.

Les plaques circulaires sont également traitées dans l'article de M. Destrade, YB. Fu, "A wave near the edge of a circular disk", The open acoustic journal, 2008, pp. 15-18 qui étudie par exemple une onde de surface dans un disque, étude qui n'interfère pas avec la présente invention.

En synthèse, les références précitées sont essentiellement axées sur le contrôle non destructif des structures et dans lesquelles le mode de vibration permet de mettre en évidence les défauts. Ces références ne présentent pas de solutions permettant de s'affranchir du défaut présent pour obtenir une onde de forme désirée.

Pour adresser ce problème de présence de défaut, les Demandeurs ont considéré comme plus pertinent de s'éloigner de la problématique (plaque, onde de Lamb) pour se tourner vers la problématique des résonateurs acoustiques, pour lesquels on veut justement conserver le mode de vibration avec le meilleur facteur de qualité possible.

Dans le cas des résonateurs à onde de surface, les SAW, on utilise un système de peignes interdigités pour générer une onde de surface, se propageant dans le plan du résonateur. Pour optimiser le facteur de qualité du dispositif et éviter une perte d'énergie avec une dispersion de l'onde, des réflecteurs sont disposés de part et d'autre du système de peignes interdigités, comme le montre l'article MF. Hribsek, DV. Tosic, MR. Radosavljevic, « Surface Acoustic Wave sensors in mechanical engineering », FME transactions, 38, 2010, pp. 11-18.

Ces réflecteurs ont pour but de créer une différence d'impédance acoustique. L'onde se propageant est ainsi réfléchie sur ce milieu d'impédance différente et peut être confinée dans la partie « active » du résonateur.

Dans ce contexte, la présente invention propose une solution permettant de pallier le problème de perturbation des modes de plaque dans un support présentant un défaut qu'il soit de nature géométrique type défaut de bord, ou que ce défaut corresponde à une hétérogénéité de structure (trou, surépaisseur, changement de matière, ...).

La présente invention a ainsi pour objet un dispositif vibrant selon la revendication 1.

On définit par modes de plaque, des modes tels que des modes de propagation des ondes de Lamb ou de Rayleigh.

On définit selon la présente invention, un réflecteur mécanique encastré comme une structure réfléchissante pour les modes de plaque générées et constituant une position de blocage dans le premier support destiné à être mis en vibration, ladite position de blocage étant solidaire dudit second support.

Les réflecteurs encastrés de l'invention sont des éléments de matière tels que par exemple une plaque, une paroi, un ensemble de plots, en contact avec le premier support. Ces éléments de matière ne sont pas comparables à des fentes qui laissent passer les ondes à leurs extrémités.

Le réflecteur de l'invention peut être en contact avec le premier support par tout moyen et par exemple par contact direct, par collage, par emboitement etc....

Par ailleurs, on définit un défaut vis-à-vis de la propagation des modes de plaque comme un défaut générant des perturbations au niveau des ventres et des noeuds d'un mode de propagation par rapport à ceux obtenus dans le cas de la propagation d'un même mode généré dans un support sans défaut, soit dans le contexte de la présente invention un support homogène de géométrie rectangulaire.

Selon une variante de l'invention, le premier support comporte des défauts, le dispositif comprenant un ensemble de réflecteurs mécaniques encastrés configuré pour définir ladite zone active, excluant lesdits défauts.

Selon une variante de l'invention, le premier support comporte des défauts, le dispositif comprenant un ensemble de réflecteurs mécaniques encastrés configuré pour définir plusieurs zones actives, excluant lesdits défauts.

Selon une variante de l'invention, ledit premier support comporte en périphérie des arrondis, ledit dispositif comportant au moins une paire de réflecteurs mécaniques encastrés configurée pour définir ladite zone active, excluant lesdits arrondis.

Selon une variante de l'invention, ledit dispositif comprend un ensemble d'actionneurs.

Selon une variante de l'invention, les actionneurs sont répartis linéairement selon les directions X et/ou Y.

Selon une variante de l'invention, le dispositif comprend au moins un ou des actionneurs positionnés sur la surface dudit premier support, opposée à celle en regard dudit second support.

Selon une variante de l'invention, le dispositif comprend au moins un ou des actionneurs positionnés sur la surface dudit premier support, en regard dudit second support.

Selon une variante de l'invention, le réflecteur mécanique encastré comprend des éléments discrets élémentaires séparés entre eux par une distance telle qu'elle permet d'isoler ledit défaut de ladite zone active.

Selon une variante de l'invention, ledit premier support est une plaque.

Selon une variante de l'invention, le second support est un boitier dans lequel est positionné le premier support.

Selon une variante de l'invention, le premier support comporte au moins une région d'encastrement, le second support comportant au moins une excroissance capable de coopérer avec ladite région d'encastrement pour la bloquer selon la direction Z et rendre l'excroissance solidaire du premier support, l'excroissance et la région d'encastrement définissant ledit réflecteur mécanique encastré.

Selon une variante de l'invention, le dispositif comprend au moins un élément de colle, collant localement le premier support au second support et définissant ledit réflecteur mécanique encastré.

Selon une variante de l'invention, le dispositif comprend une dalle haptique avec au moins un défaut.

Selon une variante de l'invention, la dalle haptique présente une géométrie rectangulaire avec des angles arrondis.

Selon une variante de l'invention, la dalle haptique présente une diagonale comprise entre 10 cm et 12 cm et des réflecteurs mécaniques encastrés de largeur comprise entre 2 mm et 10 mm.

Selon une variante de l'invention, le dispositif comprend deux colonnes de réflecteurs mécaniques, dont l'une est positionnée en bout de dalle, en limite d'arrondis.

Selon une variante de l'invention, la dalle haptique présente au moins une partie transparente.

L'invention a aussi pour objet un appareil mobile comprenant un dispositif selon l'invention, l'appareil pouvant être un « smartphone » : téléphone évolué en termes de fonctionnalités, un ordinateur portable...

L'invention sera mieux comprise et d'autres avantages apparaîtront à la lecture de la description qui va suivre donnée à titre non limitatif et grâce aux figures annexées parmi lesquelles :
- les figures 1a et 1b schématisent un dispositif vibrant de la présente invention comprenant au moins un réflecteur mécanique encastré ;
- les figures 2a et 2b illustrent un mode de Lamb antisymétrique sur une plaque rectangulaire ;
- la figure 3 schématise un exemple de premier support comportant une plaque avec bouts arrondis et comportant une paire de réflecteurs acoustiques ;
- la figure 4 illustre la valeur absolue de l'amplitude des ventres d'un mode de Lamb à 14 ventres d'un écran de Lumia 920 en verre Dragontrail en fonction de la position en X pour 4 types d'encastrements différents ;
- la figure 5 schématise une dalle de Lumia 920 pouvant être utilisée dans un exemple de premier support d'un dispositif de l'invention et comprenant des arrondis et un défaut de matière correspondant à un trou pour placer un haut-parleur ;
- la figure 6 illustre l'amplitude d'un mode de Lamb en fonction de la position en x, obtenu sur une plaque avec angles arrondis de type Lumia 920 avec réflecteur mécanique encastré ou sans : dit libre, pour un mode à 13 ventres ;
- la figure 7 illustre l'amplitude d'un mode de Lamb en fonction de la position en y, obtenu sur une plaque avec angles arrondis de type Lumia 920, et ce pour trois observations en trois endroits de la plaque ;
- la figure 8 schématise un écran de téléphone portable avec deux rangées d'actionneurs et deux rangées de réflecteurs mécaniques encastrés ;
- les figures 9a et 9b illustrent respectivement l'amplitude et l'écart selon la direction Y, obtenus en fonction de la dimension selon la direction X de l'encastrement pour un mode à 11 ventres obtenus dans le cas d'écran illustré en figure 8 ;
- les figures 10a et 10b illustrent l'amplitude et l'écart en y en fonction de la largeur de l'encastrement pour un mode à 11 ventres obtenus dans le cas d'écran illustré en figure 8, avec un réflecteur mécanique encastré placé en limite d'arrondis de premier support ;
- la figure 11 schématise un écran de Lumia 920 avec une zone visible, les actionneurs et deux séries de réflecteurs mécaniques encastrés discrétisés ;
- les figures 12a et 12b illustrent l'amplitude et l'écart en y en fonction du nombre de points d'attache, à dimension selon la direction X d'encastrement constante ;
- la figure 13 schématise un écran de Lumia 920 avec l'encastrement sur le trou du haut-parleur ;
- la figure 14 illustre un dispositif comprenant des lignes de réflecteurs mécaniques encastrés avec une onde considérée ayant une propagation selon la direction Y ;
- la figure 15 illustre une géométrie quelconque de plaque pouvant être utilisée dans la présente invention et comprenant deux séries orthogonales de réflecteurs mécaniques encastrés ;
- la figure 16 illustre un premier mode de réalisation de l'invention comprenant des réflecteurs encastrés réalisé par collage ;
- la figure 17 illustre un second mode d'intégration d'une plaque avec des réflecteurs encastrés réalisé par clipsage.

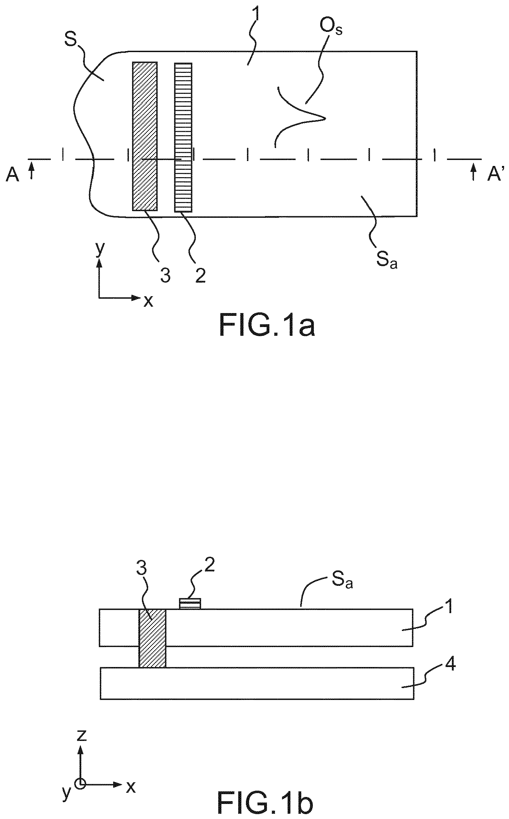

De manière générale, la présente invention concerne un dispositif comprenant au moins un réflecteur mécanique encastré permettant d'assurer une propagation de mode de plaque adéquate à la surface d'un support. La figure 1a schématise ainsi un premier support 1 comprenant une surface S définie dans un plan X,Y défini par les directions X et Y (ou axes X et Y) orthogonales dans un repère orthonormé (X, Y, Z) avec au moins un défaut dans le contexte de la présente invention. Il s'agit dans le cas représenté, de défaut de pourtour : par exemple une périphérie partiellement arrondie et non rectangulaire. Le support 1 comporte ainsi au moins un actionneur 2 capable de générer des modes de plaque référencés Os, du type ondes de Lamb et au moins un réflecteur mécanique encastré 3, permettant de définir une surface dite active Sa, isolée de la partie de pourtour non rectiligne, au niveau de laquelle la propagation des modes de plaque est réalisée de manière à pouvoir être correctement exploitée. Le premier support 1 est solidaire d'un second support 4, permettant de le bloquer localement selon l'axe Z, la région solidaire constituant le réflecteur mécanique encastré, comme schématisé en figure 1b, les hachures schématisent la fonction de réflecteur mécanique encastré (il est à noter que l'actionneur peut être soit sur la face opposée au réflecteur, soit sur la même face).

Ainsi, il est proposé de pallier la présence de défaut(s) vis-à-vis de la propagation de modes de plaque dans un dispositif les utilisant, en introduisant au moins un réflecteur mécanique encastré.

Les Demandeurs explicitent ci-après la démarche adoptée permettant de concevoir un tel dispositif. De manière générale, les dispositifs utilisant la propagation de mode de plaque type modes de propagation d'ondes de Lamb, peuvent comprendre une plaque typiquement de géométrie rectangulaire.

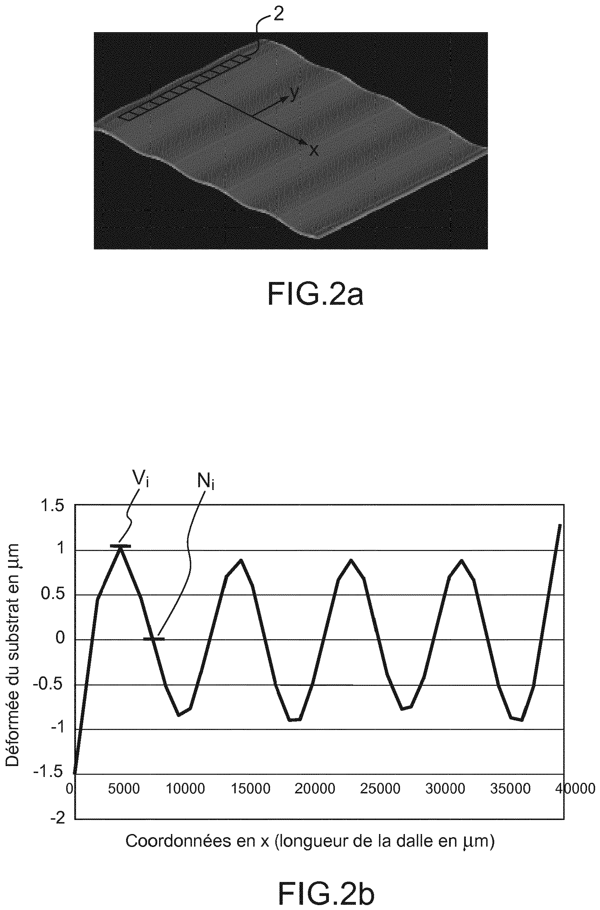

Partant de ce type de géométrie, les Demandeurs ont étudié un mode de Lamb antisymétrique A₀, obtenu en utilisant des actionneurs piézoélectriques judicieusement placés sur une plaque de surface de 40 x 30 mm² (avec une épaisseur de 725 µm), comme le montre la figure 2a (vue 3D issue d'une simulation par éléments finis, méthode connue sous l'acronyme « FEM » pour « Finite Element Method » sous un logiciel commercial Coventor et vue en coupe), mettant en évidence le nombre de ventres correspondant à des maxima d'énergie et des noeuds correspondant à un déplacement nul lors de la vibration. Sur la figure 2b, qui illustre plus précisément le mode de vibration recherché, par exemple un mode de Lamb antisymétrique, ici sur la plaque rectangulaire, le mode présente par exemple 8 ventres Vi séparés par des noeuds Ni.

Les Demandeurs ont cherché comment conserver le mode de vibration voulu, par exemple le mode stationnaire de Lamb antisymétrique A₀ présenté aux figures 2a et 2b, dans une plaque non rectangulaire.

L'exemple étudié est une plaque rectangulaire avec des angles arrondis, mais l'invention peut être étendue à d'autres types de géométrie de plaques non rectangulaires, pouvant présenter une géométrie dans le plan (X, Y) quelconque.

Dans une plaque avec bords arrondis, on ne parvient pas à générer le même mode de vibration avec des actionneurs couches minces, y compris en travaillant sur le positionnement des actionneurs, du fait des interférences provoquées par les arrondis.

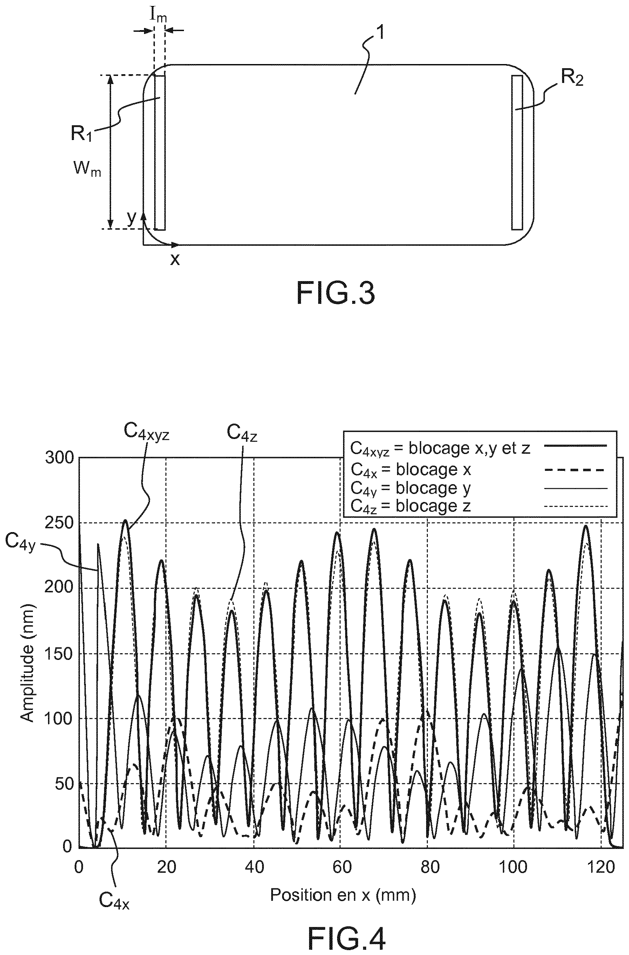

C'est pourquoi, les Demandeurs se sont tournés vers l'utilisation de réflecteurs acoustiques permettant de faire le parallèle avec ceux développés pour les SAW. La figure 3 schématise une vue de dessus d'un exemple de plaque 1 avec bouts arrondis et comportant une paire de réflecteurs R₁ et R₂.

Lorsque ces réflecteurs sont judicieusement placés comme explicité ultérieurement dans la présente description, il est possible par simulations FEM de déterminer la dimension (wₘ) correspondant à la dimension selon la direction Y, la dimension (lₘ) correspondant à la dimension selon la direction X et l'épaisseur du réflecteur (tₘ) correspondant à la dimension selon la direction Z, ainsi que les propriétés adéquates (densité) du matériau utilisé. Les propriétés permettant d'obtenir le mode le Lamb voulu, sur la plaque avec angles arrondis, sont reportées dans le tableau ci-après qui représente le dimensionnement des réflecteurs permettant d'obtenir le mode de Lamb sur la plaque à angles arrondis considérée par exemple une plaque de verre Dragontrail de la société Asahi Glass (d'épaisseur 800µm).

Deux types de plaques ont été simulées, correspondants à des rayons de courbure différents des arrondis (des cas concrets de dalles de téléphones portables existantes ont été simulées).

On peut noter que les épaisseurs tₘ et/ou les masses volumiques nécessaires sont très importantes et difficilement accessibles concrètement, nécessitant qu'une autre solution que celle utilisant des réflecteurs connus d'ondes acoustiques, soit recherchée.

| **Paramètre (mm)** | **iPhone 5 (dimensions=4pouces)** | | **Lumia 920 (dimensions=4.5pouces)** | |
|---|---|---|---|---|
| | 25kHz (13) | 33 kHz (15) | 27 kHz (14) | 35 kHz (16) |
| **Position en x** | 2 | 5 | 4,5 | 3,5 |
| **lₘ** | 4 | 2-3 | 2 | 2,5 |
| **wₘ** | 45 | 35 - 45 | 66 | 55 - 60 |
| **tₘ** | 2-100 | 30 - 400 | 2-100 | 2 |
| **ρₘ** | < 10 000 | 200 000 | max | < 1 000 |

C'est pourquoi, partant de ce constat, les Demandeurs se sont tournés vers une autre solution et proposent un dispositif vibrant utilisant au moins un réflecteur mécanique, en remplacement de réflecteur acoustique « classique », permettant en plus de la réflexion acoustique de l'onde qui assure le mode voulu dans une plaque non rectangulaire, de maintenir les propriétés de propagation comme dans une plaque de configuration rectangulaire.

La présente invention propose ainsi une solution dans laquelle, des encastrements mécaniques sont utilisés en tant que réflecteurs vis-à-vis des ondes mécaniques.

La figure 4 tirée de simulation FEM avec l'outil commercial de simulation ANSYS, fournit la valeur absolue de l'amplitude des ventres d'un mode à 14 ventres d'un écran de Lumia 920 en verre Dragontrail encore dénommé dalle (épaisseur 800µm) en fonction de la position en x pour 4 types d'encastrements différents, la courbe C_{4X} est relative à un blocage selon la direction X, la courbe C_{4Y} est relative à un blocage selon la direction Y, la courbe C_{4Z} est relative à un blocage selon la direction Z et la courbe C_{4XYZ} est relative à un blocage selon les trois directions X, Y et Z. Cette figure montre que dans le cas d'une plaque rectangulaire avec des angles arrondis (dimensions d'un écran de Lumia 920, de 4.5 pouces de diagonale (soit 11,43 cm), d'une épaisseur de verre Dragontrail de 800 µm), des réflecteurs mécaniques encastrés permettent de retrouver le mode de Lamb voulu. De plus, il ressort de l'ensemble de ces courbes que l'encastrement nécessaire s'apparente uniquement à un blocage de la dalle selon la direction Z, c'est-à-dire à un blocage empêchant la dalle de se déplacer suivant cette direction hors plan.

Pour dimensionner également des réflecteurs mécaniques encastrés d'autres types de plaques non rectangulaires, les Demandeurs ont étudié des plaques non rectangulaires présentant des dimensions issues de Smartphones existants, cette méthodologie pouvant être utilisée également pour dimensionner des réflecteurs mécaniques encastrés d'autres types de plaques non rectangulaires.

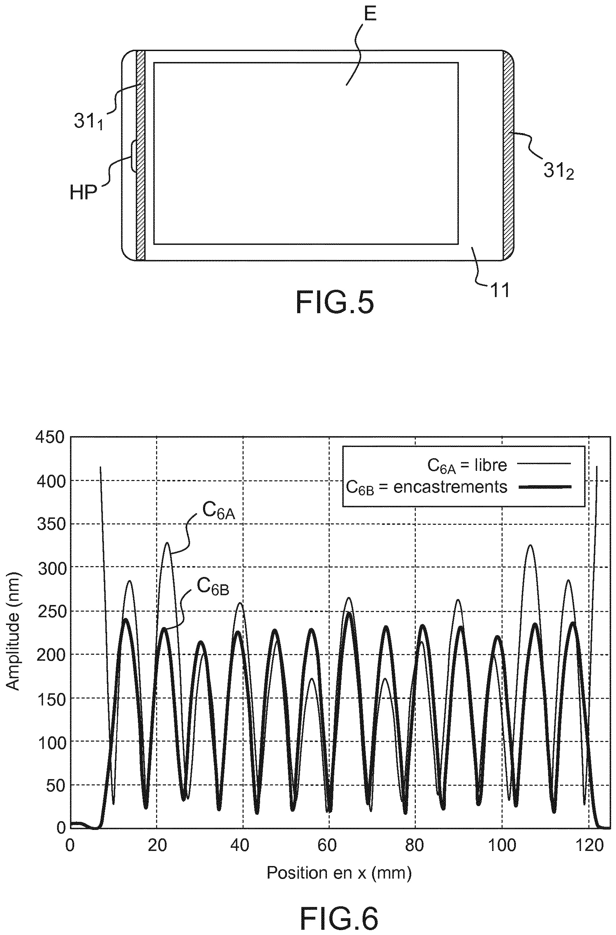

De manière détaillée, les Demandeurs ont ainsi étudié une plaque avec des angles arrondis correspondant aux dimensions d'une dalle d'un Lumia 920 (4,5 pouce pour ce Smartphone existant) (en implémentant l'invention dans cette dalle) et représentée en figure 5, soit un premier support 11 comportant un écran transparent E, en périphérie duquel sont disposés deux réflecteurs mécaniques encastrés 31₁ et 31₂ et un haut-parleur HP.

Cette plaque comporte ainsi des défauts de pourtour (angles arrondis) et des défauts de matière (trou laissé au niveau du haut-parleur), les réflecteurs mécaniques étant positionnés pour exploiter le maximum de place de la plaque, c'est-à-dire en définissant une surface active la plus grande possible en occultant les arrondis de pourtour.

Pour cela la méthodologie suivante est appliquée :
- on réalise la modélisation de la géométrie de la plaque vibrante sur laquelle on positionne deux cordons de réflecteurs mécaniques encastrés ;
- on initie une analyse modale sous le logiciel de FEM commercial (ANSYS) pour identifier la fréquence du mode recherché ;
- on positionne selon le modèle FEM, les actionneurs piézoélectriques sur des ventres de vibration, dépendant de la fréquence du mode retenu (la méthodologie pour optimiser le positionnement des actionneurs est connue de l'homme de l'art) ;
- on procède ensuite à une simulation harmonique, ou une série de simulations harmoniques afin de positionner au mieux les réflecteurs mécaniques encastrés, la position des actionneurs en découlant. En effet après avoir déterminé la position du ou des réflecteurs mécaniques encastrés permettant de délimiter la surface active, on est amené à positionner le ou les actionneurs au niveau de cette surface active.

La figure 6 illustre l'amplitude d'un mode de Lamb en fonction de la position en x, obtenu sur une plaque avec angles arrondis de type Lumia 920 sans réflecteur mécanique encastré : configuration dite libre (courbe C_{6A}) ou avec réflecteur mécanique encastré (courbe C_{6B}), pour un mode à 13 ventres.

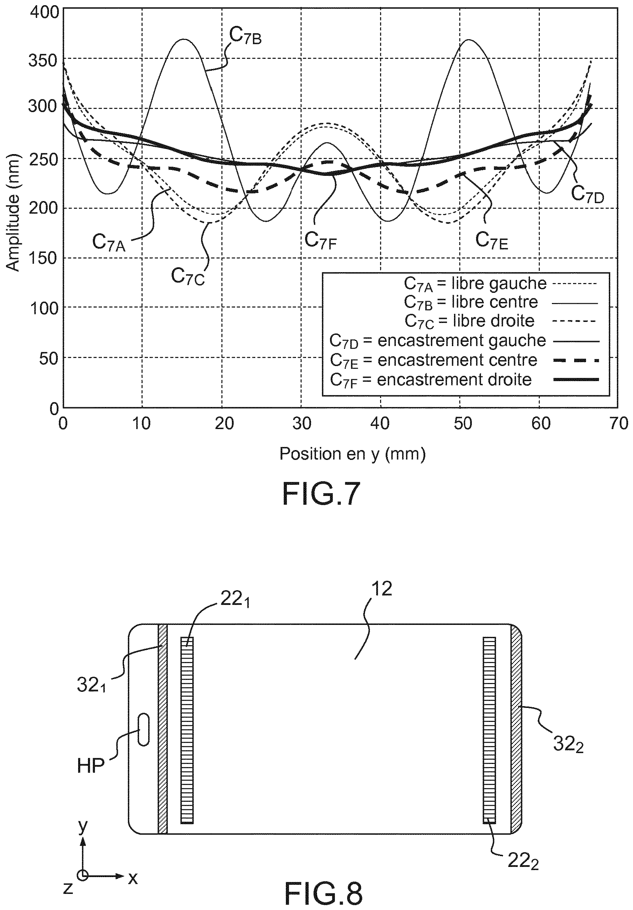

La figure 7 illustre l'amplitude d'un mode de Lamb en fonction de la position en y selon la direction Y, obtenu sur une plaque avec angles arrondis de type Lumia 920, et ce pour trois observations en trois endroits de la plaque : à l'extrémité gauche, à l'extrémité droite et au centre (selon la direction X). La courbe C_{7A} est relative à une configuration libre prise en extrémité gauche, la courbe C_{7B} est relative à une configuration libre prise au centre, la courbe C_{7C} est relative à une configuration libre prise en extrémité droite. La courbe C_{7D} est relative à une configuration avec réflecteur mécanique encastré prise en extrémité gauche, la courbe C_{7E} est relative à une configuration avec réflecteur mécanique encastré prise au centre, la courbe C_{7F} est relative à une configuration avec réflecteur mécanique encastré prise en extrémité droite.

Ces figures mettent en évidence qu'avec des réflecteurs mécaniques encastrés, il devient possible de retrouver sur une plaque rectangulaire avec des angles arrondis, un mode de Lamb tel que celui obtenu sur une plaque rectangulaire, à savoir : une succession de ventres et noeuds de vibration selon la direction X et peu de modulation selon la direction Y.

Les Demandeurs ont ainsi prouvé que des réflecteurs mécaniques encastrés permettent de s'affranchir des perturbations causées par la présence de défaut tels que des angles arrondis mais également des défauts d'hétérogénéité de matière (dans le cas présent il s'agit du trou laissé au niveau du haut-parleur), et ainsi conserver un mode de vibration voulu dans une plaque non rectangulaire, en ayant délimité une surface active sans défaut au niveau de laquelle sont positionnés les actionneurs.

Afin de définir des règles de conception, les Demandeurs ont étudié l'impact de la largeur (lₘ) par exemple celle du réflecteur mécanique encastré de droite sur la figure 5, sur l'uniformité des modes sur un substrat de 800 µm de verre Dragontrail et pour une géométrie correspondant à l'iphone 5 (dimension 4 pouces soit 10,2 cm). La largeur des réflecteurs correspond à la dimension des réflecteurs selon la direction X. La configuration étudiée est celle illustrée en figure 8 présentant sur un premier support 12, une paire de réflecteurs mécaniques encastrés 32₁ et 32₂ et deux colonnes d'actionneurs 22₁ et 22₂. Un trou de haut parleur HP est positionné juxtaposé au niveau d'un réflecteur mécanique encastré, le réflecteur mécanique de droite est positionné en bout de dalle, mais selon sa largeur, il occulte plus ou moins les arrondis de pourtour (chaque réflecteur empêche l'onde de « voir » le défaut qui se trouve derrière, il faut donc un réflecteur par défaut en quelque sorte).

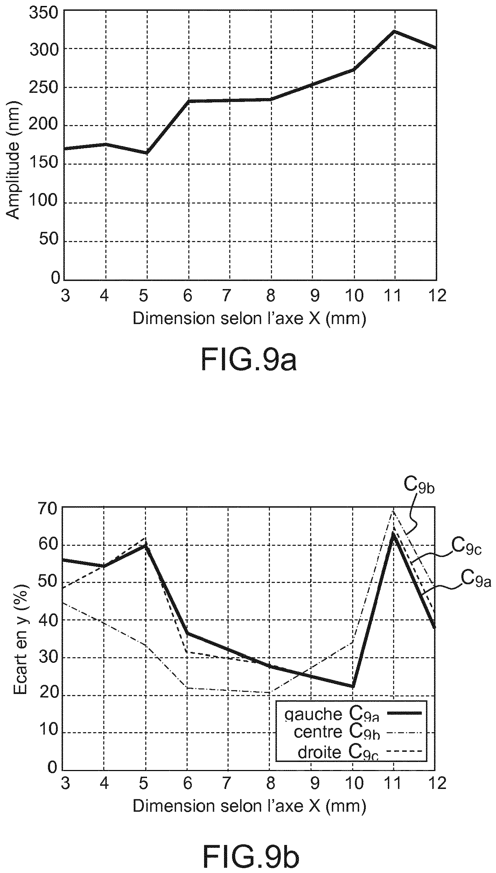

Pour cela, il est possible de faire varier la dimension selon la direction X, dudit réflecteur mécanique encastré de droite 32₂, et d'observer les modes obtenus. Dans chaque cas, il convient de retrouver la position optimale des actionneurs. Les figures 9a et 9b illustrent respectivement l'amplitude et l'écart selon la direction Y, obtenus en fonction de la dimension selon la direction X, de l'encastrement pour un mode à 11 ventres (courbe C₉ₐ : configuration prise en extrémité gauche, courbe C_{9b} : configuration prise au centre et courbe C_{9c :} configuration prise en extrémité droite).

Il apparait que des encastrements de plus grande dimension selon la direction X permettent une meilleure uniformité du mode sur la plaque, ainsi qu'une plus grande amplitude au centre de la dalle. Cependant il ne semble pas utile de dépasser une dimension selon la direction X d'environ 10-11 mm (dans ce cas précis) car de manière générale, la dimension selon la direction X optimale des réflecteurs dépend de la longueur d'onde.

En effet, les arrondis ont moins d'impact dans ces domaines.

Les Demandeurs ont également analysé l'influence de la dimension selon la direction X de l'encastrement, et l'influence de sa position sur la dalle.

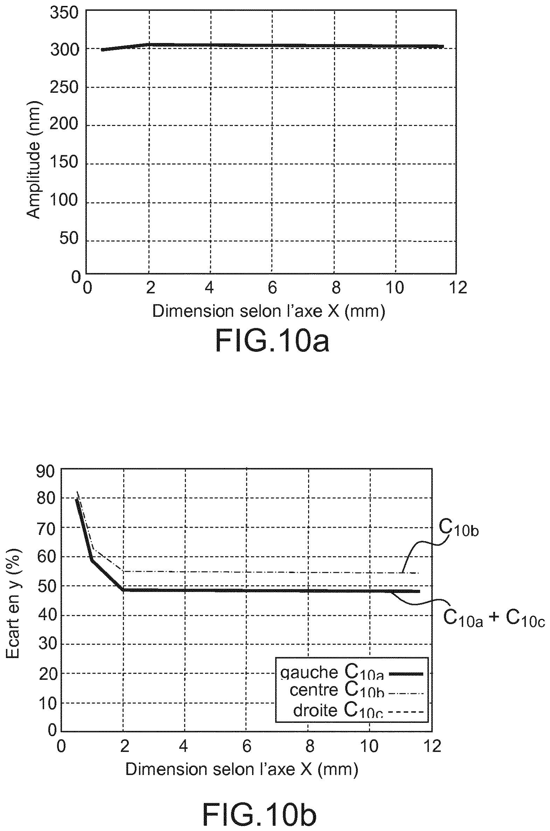

Le même système que celui précédemment décrit a été modélisé, avec le réflecteur mécanique encastré de droite placé à la limite des arrondis, et en faisant varier sa dimension selon la direction X. De cette façon, les arrondis ne doivent plus intervenir dans la vibration, cette approche permet de déterminer si la dimension selon la direction X du réflecteur mécanique encastré intervient au niveau de l'amplitude, la fréquence ou l'uniformité. Les résultats sont présentés sur les figures 10a et 10b, qui illustrent également l'amplitude et l'écart selon la direction Y en fonction de la dimension selon la direction X de l'encastrement pour un mode à 11 ventres. (courbe C₁₀ₐ : configuration prise en extrémité gauche, courbe _{10b} : configuration prise au centre et courbe C_{10c :} configuration prise en extrémité droite).

Il apparait que l'amplitude et l'uniformité ne sont pas modifiées par la dimension selon la direction X du réflecteur mécanique encastré tant que cette largeur reste suffisante (environ 2 mm). Pour une dimension selon l'axe X de réflecteur mécanique encastré en-deçà de cette valeur, une déformation importante de la portion de dalle située après l'encastrement apparait liée à une perte de l'énergie. Cela se traduit par une perte d'uniformité de l'ordre de 40%.

Il apparait ainsi qu'un réflecteur mécanique encastré d'une dimension selon la direction X au moins égale à 2 mm permet d'optimiser l'amplitude et l'uniformité du mode sur la dalle.

Les Demandeurs ont aussi cherché à déterminer la position optimale, selon les deux directions X et Y, du réflecteur mécanique encastré. A droite, il a été montré qu'il est possible de positionner le réflecteur mécanique encastré en bout de la dalle, pour conserver un maximum d'espace disponible Les demandeurs ont aussi cherché à déterminer si le réflecteur mécanique encastré doit couvrir toute la I dimension selon l'axe Y de la dalle, et s'il peut être positionné au niveau du trou du haut-parleur. Pour cela des études d'implémentation de l'invention sur un écran de Lumia 920, avec une épaisseur de 800 µm ont été réalisées.

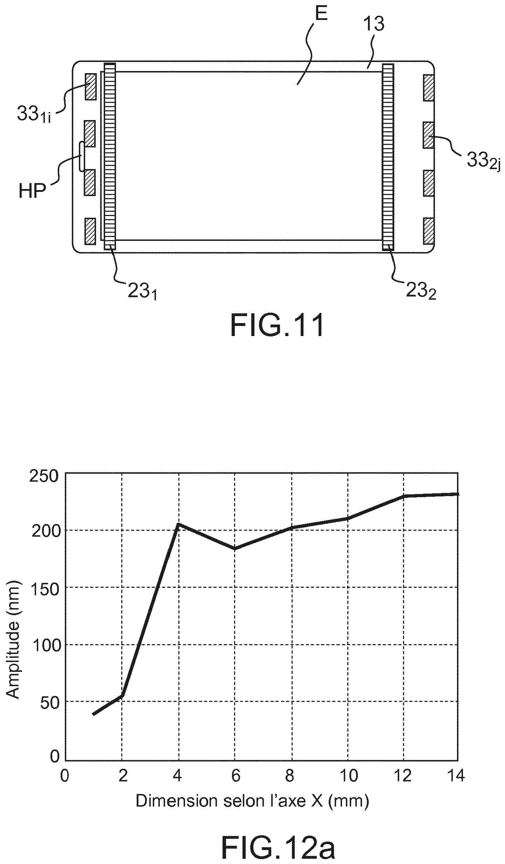

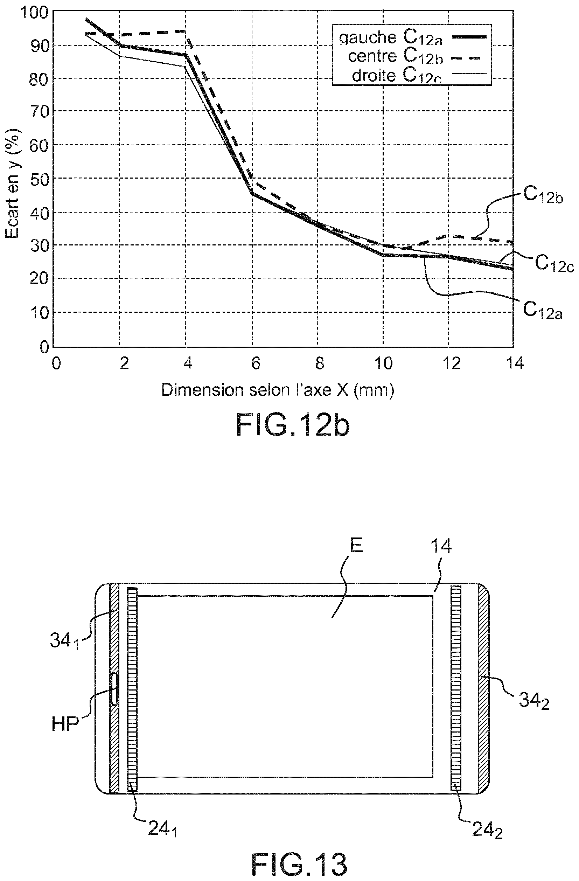

Dans un premier temps, la position selon l'axe Y des réflecteurs mécaniques encastrés a été étudiée. Par mesure de simplicité, deux colonnes de réflecteurs mécaniques encastrés identiques ont été prises en considération composées respectivement de réflecteurs 33₁ᵢ et 33₂ⱼ . La première colonne est positionnée juste après le trou du haut-parleur HP. La deuxième colonne est positionnée au bout de la dalle . Cela est présenté sur la figure 11 qui illustre une configuration de premier support pouvant être utilisée dans un dispositif de l'invention et comportant une zone visible E et deux séries d'actionneurs 23₁ et 23₂. Le nombre de réflecteurs mécaniques encastrés est modifié, ces réflecteurs mécaniques encastrés recouvrant la moitié de la largeur de la dalle. Il apparait que l'amplitude augmente avec le nombre de réflecteurs mécaniques encastrés. Il n'est pas impératif d'avoir un unique réflecteur mécanique encastré sur toute la dimension selon l'axe Y de la dalle. Il convient néanmoins d'avoir des réflecteurs mécaniques encastrés suffisamment rapprochés pour conserver l'effet escompté. Les figures 12a et 12b illustrent l'amplitude et l'écart en y selon la direction Y en fonction du nombre de réflecteurs mécaniques encastrés, à dimension selon la direction X d'encastrement constante (courbe C₁₂ₐ : configuration prise en extrémité gauche, courbe C_{12b} : configuration prise au centre et courbe C_{12c :} configuration prise en extrémité droite).

Avec un nombre de réflecteurs mécaniques encastrés suffisant, les performances obtenues sont satisfaisantes. En effet, pour une dimension selon l'axe Y donnée, l'augmentation du nombre de réflecteurs permet de réduire l'espace libre entre réflecteurs.

Selon une variante de l'invention illustrée en figure 13, il est également possible de positionner le haut-parleur HP au niveau d'un des réflecteurs mécaniques encastrés 34₁.

En synthèse, un exemple de dispositif vibrant performant selon la présente invention, destiné à pouvoir être intégré dans des Smartphones peut comprendre sur une dalle de 4 à 4.5 pouces, équipé d'un trou de haut-parleur :
- deux colonnes de réflecteurs mécaniques encastrés permettant le blocage de la plaque selon la direction Z ;
- l'une des colonnes peut être positionnée en bout de dalle ;
- la dimension selon l'axe X des réflecteurs mécaniques encastrés étant comprise entre environ 2 mm et inférieure à environ 10 mm ;
- les deux colonnes de réflecteurs mécaniques encastrés étant discrétisées, avec des réflecteurs mécaniques encastrés éloignés d'une distance inférieure à 5,5 mm.

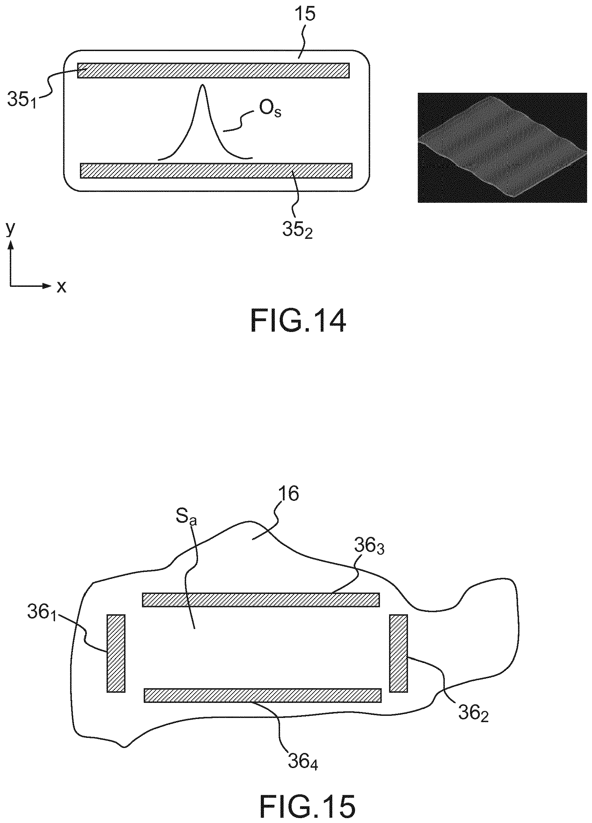

Il a été précédemment décrit des configurations dans lesquelles, les réflecteurs encastrés sont positionnés parallèlement aux petits côtés d'une dalle rectangulaire à angles arrondis. Ce principe peut être étendu pour un positionnement des réflecteurs parallèlement aux grands côtés d'une telle plaque comme le montre la figure 14 qui illustre un dispositif comprenant une plaque 15, des colonnes d'actionneurs non-représentés pouvant être disposés parallèles ou orthogonaux aux réflecteurs 35₁ et 35₂, l'onde considérée Os ayant une propagation selon la direction Y. En effet, selon la fréquence d'excitation, même des actionneurs positionnés selon la direction Y, soit orthogonalement à la position des réflecteurs mécaniques encastrés, peuvent générer une onde dont le front d'onde est perpendiculaire auxdits réflecteurs mécaniques encastrés.

De manière générale, la présente invention peut concerner une géométrie quelconque de plaque, telle que celle illustrée en figure 15. Pour délimiter la surface active Sa, deux séries de réflecteurs sont respectivement disposées selon l'axe X : réflecteurs 36₁ et 36₂ et selon l'axe Y : réflecteurs 36₃ et 36₄. Pour optimiser le positionnement des réflecteurs, la méthodologie d'étude décrite précédemment peut être utilisée selon l'onde considérée, la position des actionneurs, etc.

### Exemple d'application aux dalles haptiques

Une dalle haptique fonctionne par un effet de lame d'air, créé à la surface de la dalle par la vibration de cette dernière. Cette vibration est provoquée par des actionneurs piézoélectriques collés ou déposés et gravés sur la plaque. Pour un bon effet haptique, il est nécessaire d'obtenir une amplitude de vibration d'environ 1µm dans le mode de Lamb A₀. Les Demandeurs ont prouvé la possibilité d'obtenir un ressenti haptique en utilisant des actionneurs couches minces en PZT, matériau particulièrement intéressant et recherché dans des applications pour les Smartphone qui présentent des angles arrondis comme schématisé précédemment dans l'ensemble de la description.

### Premier exemple de réalisation

Les modes de réalisation peuvent dépendre de l'application ciblée. Dans de nombreux cas, comme celui de l'haptique, la réalisation de réflecteur mécanique encastré assurant au moins un blocage selon la direction Z est « facile » à mettre en oeuvre par le biais de la fixation d'une plaque assurant le premier support en synergie avec un boitier solidarisé audit premier support.

Le réflecteur mécanique encastré doit empêcher le mouvement de la plaque selon la direction Z. Il peut être par exemple assuré par un collage du boitier avec la plaque résonante. La région collée au niveau de ladite plaque constituant le réflecteur mécanique encastré.

Le cordon de colle présente les dimensions en x, y (dans le plan) dimensionnées comme celles décrites précédemment de manière à réaliser un réflecteur mécanique encastré aux dimensions voulues.

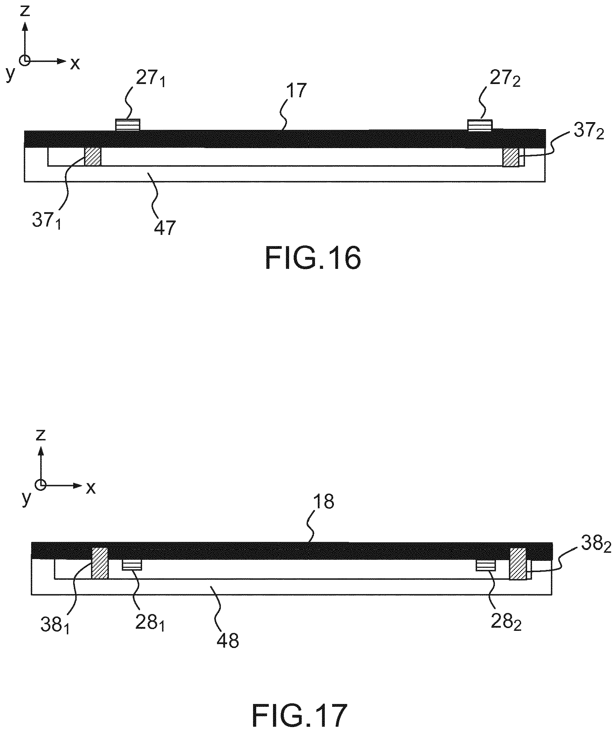

L'épaisseur de colle peut également être fixée selon le matériau utilisé. La colle peut être une colle époxy, une colle UV ou tout autre colle adaptée. Cette configuration est illustrée en figure 16 et met en évidence :
- un premier support 17 ;
- deux actionneurs 27₁ et 27₂ (il est à noter que les actionneurs peuvent être préférentiellement du même coté que les réflecteurs, et ils peuvent également être des deux côtés du premier support) ;
- deux réflecteurs mécaniques encastrés 37₁ et 37₂ réalisés par des cordons de colle ;
- un second support 47.

### Second exemple de réalisation

Selon ce second exemple, le réflecteur mécanique encastré consiste en un clipsage de la dalle sur le boitier. Dans ce cas la dalle vibrante est usinée par laser, usinage ionique ou toute autre méthode adaptée de sorte à graver partiellement la dalle aux zones d'encastrement prévues par l'étape de dimensionnement et définir ainsi des cavités.

Cette gravure peut présenter une profondeur allant de quelques micromètres à plusieurs centaines de micromètres. En regard, le boitier présente des picots, réalisés en même temps dans le même matériau que celui du boitier, ou réalisés ultérieurement et éventuellement dans un autre matériau que celui du boitier. Les dimensions selon les axes X et Y des picots sont fixées par les dimensions des cavités en regard (et par des règles de design pour que l'insertion des picots induise leur fixation au niveau de la dalle). La hauteur des picots est adaptée à la profondeur du capot. Lors de l'assemblage du boitier et de la dalle vibrante, les picots s'insèrent et se bloquent dans les cavités de la dalle de sorte à bloquer selon la direction Z, le déplacement de la plaque. Cette configuration est illustrée en figure 17 qui met en évidence :
- un premier support 18 ;
- deux actionneurs 28₁ et 28_{2 :} dans cet exemple les actionneurs peuvent tout aussi bien être situés sur la face en regard du second support (et/ou sur l'autre face)
- deux réflecteurs mécaniques encastrés 38₁ et 38₂ réalisés par des picots capables de coopérer avec des gravures réalisées au niveau de la plaque 18 ;
- un second support 48 correspondant au boîtier dans lequel est positionnée la dalle.

Il est à noter que la configuration des actionneurs n'est donnée qu'à titre d'exemple sous forme de deux colonnes, mais bien d'autres configurations sont envisageables : une seule colonne d'actionneurs, des actionneurs non disposés en colonne mais positionnés le long du grand coté de la dalle, etc.

## Revendications

1. Dispositif vibrant comprenant :
- un premier support (1) configuré pour se déformer présentant une surface (S) définie dans un plan selon des directions X et Y ;
- ledit premier support comportant :
o au moins un défaut vis-à-vis de la propagation de modes de plaque dans ledit premier support ;
o ledit défaut étant de nature géométrique ou correspondant à une hétérogénéité de structure ;
- un second support (4) ;
- au moins un réflecteur mécanique encastré (3) solidaire dudit premier support et en contact avec ledit premier support, configuré pour bloquer ledit premier support selon au moins une direction Z perpendiculaire auxdites directions X et Y, ledit réflecteur mécanique étant solidaire dudit second support;
- ledit réflecteur mécanique encastré étant configuré pour isoler une zone dite active (Sa) appartenant à ladite surface (S) définie dans un plan selon des directions X et Y dans laquelle se propagent les modes de plaque, ladite zone active excluant ledit défaut ;
- ledit au moins un réflecteur mécanique encastré étant un élément de matière et s'étendant longitudinalement selon la direction X et/ou selon la direction Y de la surface (S) ;
ledit dispositif étant **caractérisé en ce que** :
- ledit premier support (1) est muni d'au moins un actionneur (2) situé dans ladite région active et configuré pour générer, dans ledit premier support, des modes de plaque stationnaires se propageant dans ledit premier support ; et **en ce que**
- ledit défaut est un défaut vis-à-vis de la propagation des modes de plaque, générant des perturbations au niveau des ventres et des noeuds d'un mode de propagation par rapport à ceux obtenus dans le cas de la propagation d'un même mode généré dans un support sans défaut, i.e. un support homogène de géométrie rectangulaire.

2. Dispositif vibrant selon la revendication 1, **caractérisé en ce que** le premier support comporte des défauts, le dispositif comprenant un ensemble de réflecteurs mécaniques encastrés configuré pour définir ladite zone active, excluant lesdits défauts.

3. Dispositif vibrant selon la revendication 1, **caractérisé en ce que** le premier support comporte des défauts, le dispositif comprenant un ensemble de réflecteurs mécaniques encastrés configuré pour définir plusieurs zones actives, excluant lesdits défauts.

4. Dispositif vibrant selon l'une des revendications 1 ou 2, **caractérisé en ce que** ledit premier support comporte en périphérie des arrondis, ledit dispositif comportant au moins une paire de réflecteurs mécaniques encastrés configurée pour définir ladite zone active, excluant lesdits arrondis.

5. Dispositif vibrant selon l'une des revendications 1 à 4, **caractérisé en ce qu'**il comprend un ensemble d'actionneurs.

6. Dispositif vibrant selon la revendication 5, **caractérisé en ce que** les actionneurs sont répartis linéairement selon les directions X et/ou Y.

7. Dispositif vibrant selon l'une des revendications 1 à 6, **caractérisé en ce qu'**il comprend au moins un ou des actionneurs positionnés sur la surface dudit premier support, opposée à celle en regard dudit second support.

8. Dispositif vibrant selon l'une des revendications 1 à 7, **caractérisé en ce qu'**il comprend au moins un ou des actionneurs positionnés sur la surface dudit premier support, en regard dudit second support.

9. Dispositif vibrant selon l'une des revendications 1 à 8, **caractérisé en ce que** le réflecteur mécanique encastré comprend des éléments discrets élémentaires séparés entre eux par une distance telle qu'elle permet d'isoler ledit défaut de ladite zone active.

10. Dispositif vibrant selon l'une des revendications 1 à 9, **caractérisé en ce que** ledit premier support est une plaque.

11. Dispositif vibrant selon l'une des revendications 1 à 10, **caractérisé en ce que** le second support est un boitier dans lequel est positionné le premier support.

12. Dispositif vibrant selon l'une des revendications 1 à 11, **caractérisé en ce que** :
- le premier support comporte au moins une région d'encastrement ;
- le second support comporte au moins une excroissance capable de coopérer avec ladite région d'encastrement pour la bloquer selon la direction Z et rendre l'excroissance solidaire du premier support, l'excroissance et la région d'encastrement définissant ledit réflecteur mécanique encastré.

13. Dispositif vibrant selon l'une des revendications 1 à 11, **caractérisé en ce qu'**il comprend au moins un élément de colle, collant localement le premier support au second support et définissant ledit réflecteur mécanique encastré.

14. Dispositif vibrant selon l'une des revendications 1 à 13, **caractérisé en ce qu'**il comprend une dalle haptique avec au moins un défaut.

15. Dispositif vibrant selon la revendication 14, **caractérisé en ce que** la dalle haptique présente une géométrie rectangulaire avec des angles arrondis.

16. Dispositif vibrant selon la revendication 14 ou 15, **caractérisé en ce que** la dalle haptique présente une diagonale comprise entre 10 cm et 12 cm et des réflecteurs mécaniques encastrés de largeur comprise entre 2 mm et 10 mm.

17. Dispositif vibrant selon la revendication 15 ou selon la revendication 16 dépendante de la revendication 15, **caractérisé en ce qu'**il comprend deux colonnes de réflecteurs mécaniques, dont l'une est positionnée en bout de dalle, en limite d'arrondis.

18. Dispositif vibrant selon l'une des revendications 14 à 17, **caractérisé en ce que** la dalle haptique présente au moins une partie transparente.

19. Appareil mobile comprenant un dispositif selon l'une des revendications 1 à 18.

20. Appareil mobile selon la revendication 19, **caractérisé en ce qu'**il est un téléphone mobile.

## Patentansprüche

1. Vibrationsvorrichtung, die Folgendes umfasst:
- einen ersten Träger (1), der zum Verformen konfiguriert ist, der eine Oberfläche (S) aufweist, die in einer Ebene entlang von X- und Y-Richtungen definiert ist;
- wobei der erste Träger Folgendes aufweist:
o mindestens einen Defekt in Bezug auf die Ausbreitung von Plattenmoden in dem ersten Träger;
o wobei der Fehler von geometrischer Natur ist oder einer strukturellen Heterogenität entspricht;
- einen zweiten Träger (4);
- mindestens einen eingebetteten mechanischen Reflektor (3), der fest mit dem ersten Träger verbunden und mit dem ersten Träger in Kontakt ist, der so konfiguriert ist, dass er den ersten Träger in mindestens einer Z-Richtung lotrecht zur X- und Y-Richtung blockiert, wobei der mechanische Reflektor fest mit dem zweiten Träger verbunden ist;
- wobei der eingebettete mechanische Reflektor zum Isolieren einer sogenannten aktiven Zone (Sa) konfiguriert ist, die zu der Oberfläche (S) gehört, die in einer Ebene in X- und Y-Richtung definiert ist, in der sich die Plattenmoden ausbreiten, wobei die aktive Zone den Defekt ausschließt;
- wobei der mindestens eine eingebettete mechanische Reflektor ein Materialelement ist und sich in Längsrichtung in der X-Richtung und/oder in der Y-Richtung der Oberfläche (S) erstreckt;
wobei die Vorrichtung **dadurch gekennzeichnet ist, dass**:
- der erste Träger (1) mit mindestens einem Aktuator (2) versehen ist, der sich in der aktiven Region befindet und zum Erzeugen, in dem ersten Träger, von sich im ersten Träger ausbreitenden stationären Plattenmoden konfiguriert ist; und dadurch, dass
- der Defekt ein Defekt in Bezug auf die Ausbreitung der Plattenmoden ist, der Störungen an den Bäuchen und den Knoten einer Ausbreitungsmode in Bezug zu denen erzeugt, die bei der Ausbreitung einer selben erzeugten Mode in einem Träger ohne Defekt, d. h. einem homogenen Träger mit rechteckiger Geometrie, erhalten werden.

2. Vibrationsvorrichtung nach Anspruch 1, **dadurch gekennzeichnet, dass** der erste Träger Defekte aufweist, wobei die Vorrichtung einen Satz von eingebetteten mechanischen Reflektoren umfasst, die zum Definieren der aktiven Zone konfiguriert sind, wobei sie die Defekte ausschließen.

3. Vibrationsvorrichtung nach Anspruch 1, **dadurch gekennzeichnet, dass** der erste Träger Defekte aufweist, wobei die Vorrichtung einen Satz von eingebetteten mechanischen Reflektoren umfasst, die zum Definieren mehrerer aktiver Zonen konfiguriert sind, wobei sie die Defekte ausschließen.

4. Vibrationsvorrichtung nach einem der Ansprüche 1 oder 2, **dadurch gekennzeichnet, dass** der erste Träger am Umfang Rundungen aufweist, wobei die Vorrichtung mindestens ein Paar eingebetteter mechanischer Reflektoren aufweist, die zum Definieren der aktiven Zone konfiguriert sind, wobei sie die Rundungen ausschließen.

5. Vibrationsvorrichtung nach einem der Ansprüche 1 bis 4, **dadurch gekennzeichnet, dass** sie einen Satz von Aktuatoren umfasst.

6. Vibrationsvorrichtung nach Anspruch 5, **dadurch gekennzeichnet, dass** die Aktuatoren linear in der X- und/oder Y-Richtung verteilt sind.

7. Vibrationsvorrichtung nach einem der Ansprüche 1 bis 6, **dadurch gekennzeichnet, dass** sie mindestens einen oder mehrere Aktuatoren umfasst, die auf der Oberfläche des ersten Trägers positioniert sind, die der dem zweiten Träger zugewandten Oberfläche gegenüberliegt.

8. Vibrationsvorrichtung nach einem der Ansprüche 1 bis 7, **dadurch gekennzeichnet, dass** sie mindestens einen oder mehrere Aktuatoren umfasst, die auf der Oberfläche des ersten Trägers gegenüber dem zweiten Träger positioniert sind.

9. Vibrationsvorrichtung nach einem der Ansprüche 1 bis 8, **dadurch gekennzeichnet, dass** der eingebettete mechanische Reflektor elementare diskrete Elemente umfasst, die durch einen solchen Abstand voneinander getrennt sind, dass der Defekt von der aktiven Zone isoliert werden kann.

10. Vibrationsvorrichtung nach einem der Ansprüche 1 bis 9, **dadurch gekennzeichnet, dass** der erste Träger eine Platte ist.

11. Vibrationsvorrichtung nach einem der Ansprüche 1 bis 10, **dadurch gekennzeichnet, dass** der zweite Träger ein Gehäuse ist, in dem der erste Träger positioniert ist.

12. Vibrationsvorrichtung nach einem der Ansprüche 1 bis 11, **dadurch gekennzeichnet, dass**:
- der erste Träger mindestens eine Einbettungsregion aufweist;
- der zweite Träger mindestens eine Ausbuchtung aufweist, die mit der Einbettungsregion zusammenwirken kann, um sie in der Z-Richtung zu blockieren und die Ausbuchtung mit dem ersten Träger fest zu verbinden, wobei die Ausbuchtung und die Einbettungsregion den eingebetteten mechanischen Reflektor definieren.

13. Vibrationsvorrichtung nach einem der Ansprüche 1 bis 11, **dadurch gekennzeichnet, dass** sie mindestens ein Klebstoffelement umfasst, das den ersten Träger lokal an den zweiten Träger klebt und den eingebetteten mechanischen Reflektor definiert.

14. Vibrationsvorrichtung nach einem der Ansprüche 1 bis 13, **dadurch gekennzeichnet, dass** sie eine haptische Frontscheibe mit mindestens einem Defekt umfasst.

15. Vibrationsvorrichtung nach Anspruch 14, **dadurch gekennzeichnet, dass** die haptische Frontscheibe eine rechteckige Geometrie mit abgerundeten Ecken aufweist.

16. Vibrationsvorrichtung nach Anspruch 14 oder 15, **dadurch gekennzeichnet, dass** die haptische Frontscheibe eine Diagonale zwischen 10 cm und 12 cm und eingebettete mechanische Reflektoren mit einer Breite zwischen 2 mm und 10 mm aufweist.

17. Vibrationsvorrichtung nach Anspruch 15 oder nach Anspruch 16 in Abhängigkeit von Anspruch 15, **dadurch gekennzeichnet, dass** sie zwei Säulen mechanischer Reflektoren umfasst, von denen eine am Ende der Frontscheibe an der Grenze der Rundungen positioniert ist.

18. Vibrationsvorrichtung nach einem der Ansprüche 14 bis 17, **dadurch gekennzeichnet, dass** die haptische Frontscheibe mindestens einen transparenten Teil aufweist.

19. Mobilgerät, das eine Vorrichtung nach einem der Ansprüche 1 bis 18 umfasst.

20. Mobilgerät nach Anspruch 19, **dadurch gekennzeichnet, dass** es ein Mobiltelefon ist.

## Claims

1. A vibrating device comprising:
- a first support (1) configured to be deformed having a surface (S) defined in a plane in directions X and Y;
- said first support having:
o at least one defect with respect to the propagation of plate modes in said first support;
∘ said defect being of geometrical nature or corresponding to a structural heterogeneity;
- a second support (4);
- at least one embedded mechanical reflector (3) integral with said first support and in contact with said first support, configured to immobilize said first support in at least one direction Z which is perpendicular to said directions X and Y, said mechanical reflector being integral with said second support;
- said embedded mechanical reflector being configured to isolate a so-called active zone (Sa) belonging to said surface (S) defined in a plane in directions X and Y in which the plate modes propagate, said active zone excluding said defect;
- said at least one embedded mechanical reflector being a material element and extending longitudinally in the direction X and/or in the direction Y of the surface (S);
said device being **characterized in that**:
- said first support (1) is provided with at least one actuator (2) located in said active region and configured to generate, in said first support, stationary plate modes propagating in said first support; and **in that**
- said defect is a defect with respect to the propagation of the plate modes, generating disturbances at the antinodes and nodes of a propagation mode compared with those obtained in the case of the propagation of a same mode generated in a defect-free medium, i.e. a homogeneous support of rectangular geometry.

2. The vibrating device according to claim 1, **characterized in that** the first support has defects, the device comprising a set of embedded mechanical reflectors configured to define said active zone, excluding said defects.

3. The vibrating device according to claim 1, **characterized in that** the first support has defects, the device comprising a set of embedded mechanical reflectors configured to define several active zones, excluding said defects.

4. The vibrating device according to one of claims 1 or 2, **characterized in that** said first support has roundings at the periphery, said device having at least one pair of embedded mechanical reflectors configured to define said active zone, excluding said roundings.

5. The vibrating device according to one of claims 1 to 4, **characterized in that** it comprises a set of actuators.

6. The vibrating device according to claim 5, **characterized in that** the actuators are distributed linearly in the directions X and/or Y.

7. The vibrating device according to one of claims 1 to 6, **characterized in that** it comprises at least one or more actuators positioned on the surface of said first support, opposite that facing said second support.

8. The vibrating device according to one of claims 1 to 7, **characterized in that** it comprises at least one or more actuators positioned on the surface of said first support, facing said second support.

9. The vibrating device according to one of claims 1 to 8, **characterized in that** the embedded mechanical reflector comprises elementary discrete elements separated from one another by a distance such that it makes it possible to isolate said defect from said active zone.

10. The vibrating device according to one of claims 1 to 9, **characterized in that** said first support is a plate.

11. The vibrating device according to one of claims 1 to 10, **characterized in that** the second support is a casing in which the first support is positioned.

12. The vibrating device according to one of claims 1 to 11, **characterized in that**:
- the first support has at least one embedment region;
- the second support has at least one protuberance capable of cooperating with said embedment region to immobilize it in the direction Z and render the protuberance integral with the first support, the protuberance and the embedment region defining said embedded mechanical reflector.

13. The vibrating device according to one of claims 1 to 11, **characterized in that** it comprises at least one glue element, locally gluing the first support to the second support and defining said embedded mechanical reflector.

14. The vibrating device according to one of claims 1 to 13, **characterized in that** it comprises a haptic face plate with at least one defect.

15. The vibrating device according to claim 14, **characterized in that** the haptic face plate has a rectangular geometry with rounded corners.

16. The vibrating device according to claim 14 or 15, **characterized in that** the haptic face plate has a diagonal of between 10 cm and 12 cm and embedded mechanical reflectors having a width of between 2 mm and 10 mm.

17. The vibrating device according to claim 15 or according to claim 16 dependent on claim 15, **characterized in that** it comprises two columns of mechanical reflectors, of which one is positioned at the end of the face plate, at the rounding limit.

18. The vibrating device according to one of claims 14 to 17, **characterized in that** the haptic face plate has at least one transparent part.

19. A mobile device comprising a device according to one of claims 1 to 18.

20. The mobile device according to claim 19, **characterized in that** it is a cell phone.
